# EUROPEAN PATENT SPECIFICATION

(11) **EP 0 869 879 B1**
(45) Date of publication and mention of the grant of the patent: **13.06.2001**
(21) Application number: 96910263.1
(22) Date of filing: 02.04.1996
(51) Int. Cl.: B60R 9/058, F16B 3/00

(54) **A DEVICE FOR RELEASABLE ATTACHMENT OF AN OBJECT TO A SUPPORT**
VORRICHTUNG ZUM REVERSIBLEN BEFESTIGEN EINES OBJEKTS AN EINER TRÄGER
DISPOSITIF DE FIXATION REVERSIBLE D'UN OBJET SUR UN SUPPORT

(30) Priority: 04.04.1995 SE 9501218
(43) Date of publication of application: 14.10.1998
(73) Proprietor: MONT BLANC INDUSTRI AB, S-516 00 Dalsjöfors (SE)
(72) Inventor: REHNSTRÖM, Morgan, S-502 33 Boras (SE)
(74) Representative: Lindberg, Klas Valter Bo
(86) International application number: SE9600427
(87) International publication number: WO9631366

(56) References cited:
- WO-A-94/21490
- DE-A- 3 841 188
- DE-A- 4 027 452
- DE-C- 4 423 607
- US-A- 4 487 349

## Description

The subject invention concerns a device for releasable attachment of an object to a support, preferably for releasable attachment of load carriers and the like to the external face of a vehicle, such as the vehicle roof, and consisting of a base member arranged to be stationarily secured to the support and including oppositely directed end portions designed to be engaged from underneath from opposite sides, and of a grip member arranged to be fastened on said object and including jaws movable between an open position, the release position, wherein said jaws are freely movable past the base member end portions, and a loaded grip-engagement position in which said jaws grippingly engage the base member end portions.

A device of this kind is known for instance from DE-PS 36 14 740. This prior-art device is intended to secure load carriers to the roof of vehicles and the base member thereof is received in a groove formed in the vehicle roof and, when the fastening device is not in use, covered by a cover strip. The grip member is positioned on a load carrier foot member and is constructed like a pair of pincers of scissor type, e.g. comprising two-arm levers which are hingedly interconnected for pivotal movement about a pivot, the first arms forming the gripping jaws co-operating with the base member and the second arms of which being provided with a screw acting between them to maintain the gripping jaws in the position of engagement through lever action. However, this lever construction extends to a considerable height above the vehicle roof into the foot member of the load carrier where it is thus highly exposed to damage and wanton destruction. Owing to the comparatively large vertical extension of the tightening device the latter is also sensitive to moments of flexure upon lateral movements of the load resting on the load carrier.

The main purpose of the invention is to provide a safe fastening device in which the above-outlined disadvantages are eliminated and which has a minimal building height relatively to the support. This purpose is achieved in a fastening device constructed in accordance with the invention which is essentially characterized therein that the grip member consists of a main body part with at least one slide face thereon forming a path on which slides a jaw element arranged to be displaced by an actuating means along said path, from its release position to its grip-engagement position. By guiding the jaw element along a slide path formed on the grip member its gripping movement may be achieved without using actuating parts projecting highly above the support, with resulting considerable reduction of the building heigth of the device, a feature which is particularly advantageous when the base member is inserted into a groove as mentioned above. As a result, the means to operate the gripping jaws may be positioned very close to the roof surface and thus need not project above the latter. Thus, the fastening device may be made very compact in all directions and still be used to take considerable load.

Preferably, the actuating means is a tightening screw which is screwed into the jaw element and which is formed with a shoulder arranged to rest against a ledge associated with the grip member, in addition to which the slide path on the grip member preferably extends obliquely and the jaw element is configured as a wedge tapering towards the shoulder of the tightening screw and acting between the slide path on the grip member and the corresponding engagement part on the base member. Owing to this arrangement a very simple actuating arrangement is obtained by means of which the jaws may be moved to and be retained in an active position, in addition to which the transmission ratio of the force maintaining the gripping jaws in an active position is such that only a part of this force is applied on the associated screw.

Preferably, the engagement parts of the base member have a dovetail configuration of opposite inclination to that of the slide path. The grip of the gripping jaws thus is efficiently ensured, minimizing the risks for incomplete locking which otherwise might prove hazardous as it could result in weakening grip following a period of use.

Preferably, the jaw element is formed with a track guide means co-operating with the slide path, preferably in the shape of a protrusion on the jaw element engaging in a groove formed in the slide path. These means efficiently guide the path laterally, with the result that the base member and the grip member guide each other laterally and consequently the base member may be freely positioned on a surface without additional lateral guidance. Preferably, the jaw element is formed with a track guide means to control said element in relation to the base member engagement parts.

Preferably, the groove in the slide path comprises an undercut and a laterally projecting part of the protrusion projects into the undercut. In this manner the jaw element is prevented from being dislodged, also when its tightening screw is loosened.

Additional particularities and advantages of the invention will appear from the claims and the subsequent description referring by way of examples to a device in which the invention may be applied. Thus, the invention will be described in the following in closer detail with reference to the accompanying drawings in which:

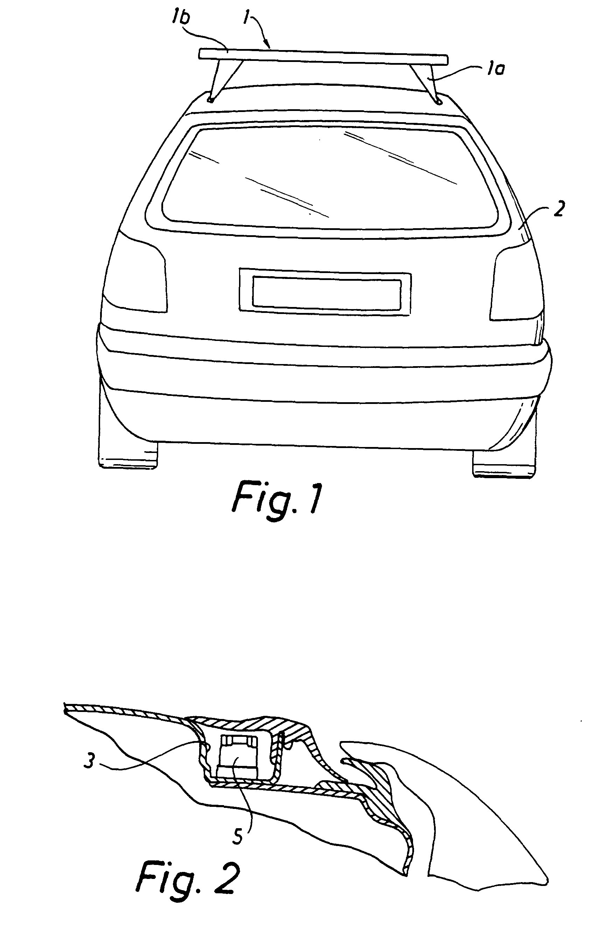

Fig. 1 is a rear view of a vehicle equipped with a load carrier;
Fig. 2 is a cross-sectional view through the portion of the vehicle roof prepared for the application thereon of the invention;

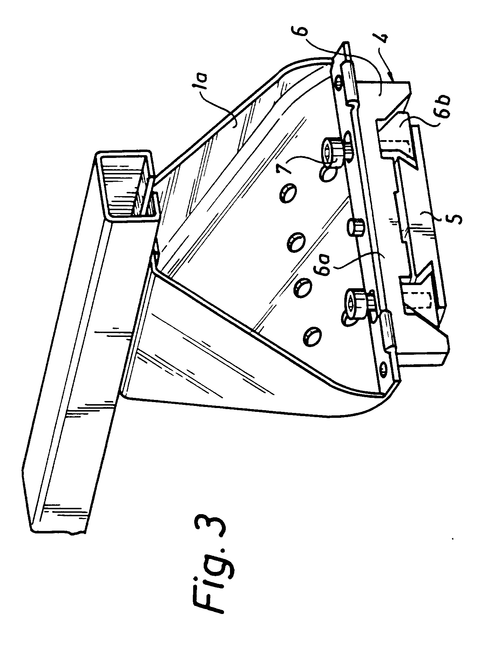

Fig. 3 is a perspective view of one end part of a load carrier deposited on a support to be fastened by means of a device in accordance with the invention;

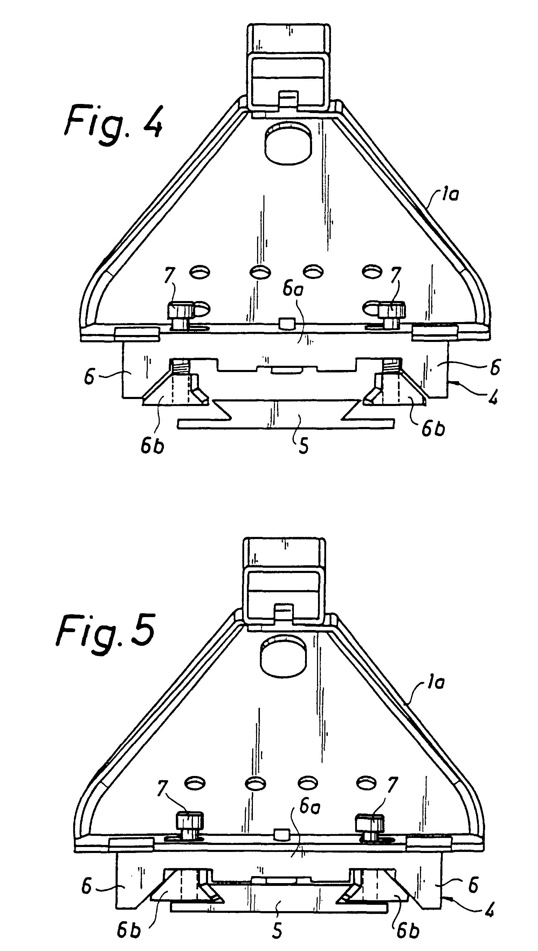

Figs. 4 and 5 are views showing in sequences the fastening of a load carrier in accordance with Fig. 3, the load carrier being shown in an end view;
Fig. 6 is an exploded view of main parts incorporated in the fastening device;
Figs. 7 and 8 are perspective views of said parts assembled and corresponding to different mounting sequences;
Fig. 9 is a longitudinal cross-sectional view through the fastening device in active position; and
Fig. 9a is a part-sectional view along line 9a-9a in Fig. 9; and
Fig. 10 is a corresponding longitudinal cross-sectional view through a fastening device in accordance with somewhat modified embodiment.

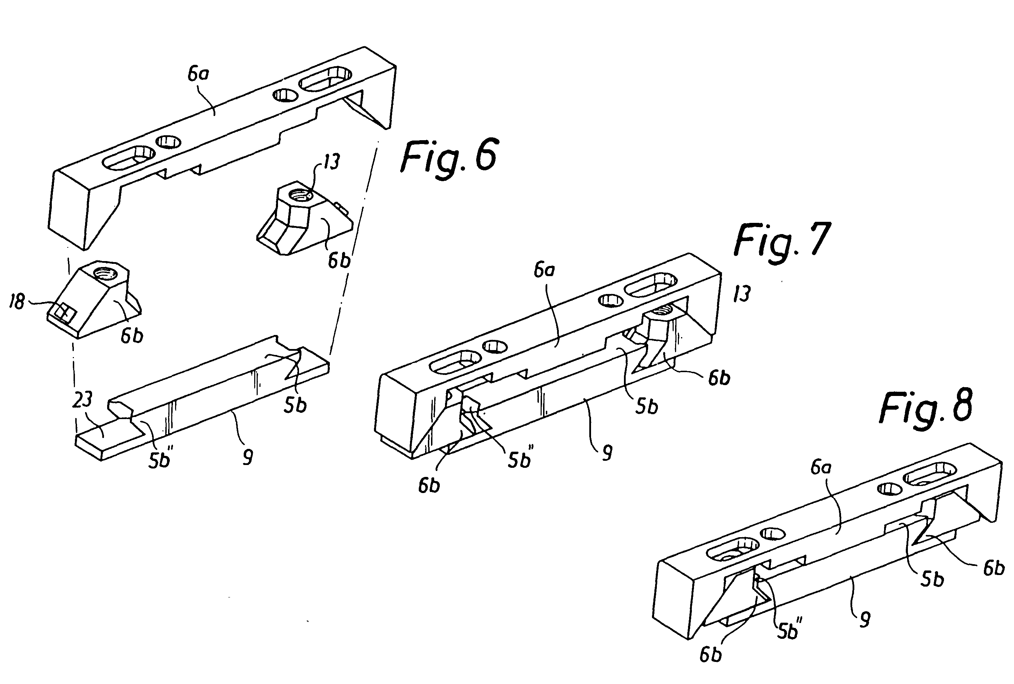

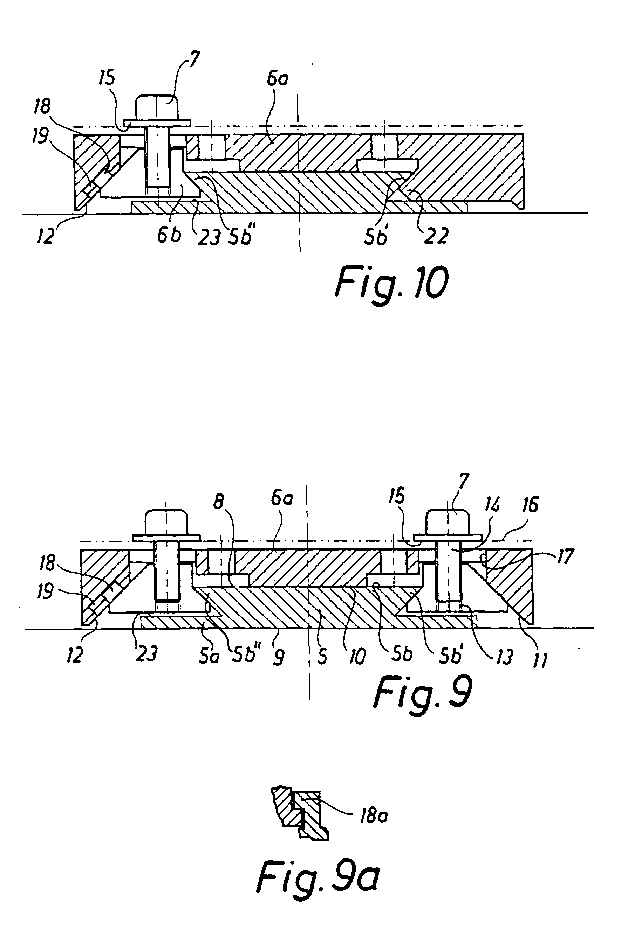

In the drawing figures annexed hereto the fastening device is shown in its application to secure a load carrier 1 on the roof of a vehicle 2. The load carrier consist of support foot members la, one at each lengthwise extending side edge of the vehicle roof, and of a cross bar 1b extending between the support foot members. Numeral reference 4 designates a fastening device generally by means of which the load carrier support foot member la may be attached to the vehicle roof, in the embodiment illustrated in a lengthwise groove 3 extending in the longitudinal direction of the vehicle roof along the side edge thereof. The main parts of the fastening device are a base member 5 and a grip member 6. The grip member 6 comprises a body 6a and gripping jaws 6b which are displaceable relatively to the body 6a. The jaws 6b are associated with the body by means of tightening screws 7. The base member 5 consist of an elongate bottom part 5a which may be placed on the corresponding support 2 and of a dovetail top part 5b which thus projects from the bottom part in the form of a protrusion the end portions 5b', 5b'' of which form oppositely directed undercut engagement parts. Numeral reference 8 designates the upper face of the base member and reference 9 a face of the base member abutting against the support 2. The base member may be fastened to the support in any convenient manner, for instance by means of screws or rivets. When the base member is factory-mounted it could even be suitable to weld the base member to the vehicle in question. The body 6a is formed with a downwardly-directed support face 10 and of its ends with downwardly facing oblique slide faces 11, 12. The gripping jaws 6e have an upwardly tapering wedge shape and are formed with a vertical threaded bore 13 into which the tightening screw 7 is screwed. The tightening screw 7 is formed with a shoulder 15 which may be tightened against an abutment face 16 on the support foot member la or parts associated therewith. The threaded portion 14 of the tightening screw extends through an elongate bore 17 in the body 6a and in the load carrier foot member la. In this manner the tightening screw 7 is allowed to move in the longitudinal direction of the body 6a. Numeral reference 18 designates a guide protrusion formed on the jaw element, said protrusion, together with a guide groove 19 formed in slide paths 11, 12 of the body, forming means for guiding the jaw element 6b along the slide path. As most clearly apparent from Fig. 6 the oblique lower face of the base member grip-engagement parts are formed with angularly cut side edges of complementary configuration to angularly cut side edges on the corresponding face on the jaw element 6b. In this manner, the jaw element 6b is guided laterally also relatively to the base member, which prevents the grip member and the base member from sliding apart laterally when exposed to load. The guide groove 19 is undercut as illustrated in Fig. 9a and the groove undercut projects into a lateral portion 18a on the guide protrusion 18. When the load carrier is be to mounted, the two jaw elements 6b are placed in their lower, spaced apart position. The jaw elements 6b remain in this position owing to the engagement between the guide protrusion 18 and the undercut groove 19 and thus they are prevented from falling off. In addition, the jaw elements 6b are maintained correctly aligned in relation to the engagement parts 5b', 5b'' on the base member. In this position the upper part, i.e. the grip member, may be lowered on top of the base member. When during this lowering motion the jaw elements 6b impinge on the upwardly-facing surface 23 on the lower portion 5a of the base member they slide along said face at the same time as the body 6a, thanks to the oblique faces 11, 12, forces the jaw elements to move towards one another into the position in which they grippingly engage the engagement parts 5b'. Upon the subsequence tightening of the tightening screws 7 the jaw elements will be securely wedged between the grip engagement parts 5b', 5b'' of the base member and the slide paths 11, 12 of the body 6a, the lower face 10 of the body 6a being moved into a position of firm abutment against the upper face 8 of the base member, and the grip member and thus the load carrier foot member 1a will be secured to the base member in a firm grip capable of withstanding strong forces acting on loads supported on the load carrier.

The embodiment illustrated in Fig. 10 is distinguished from the one shown in the preceding drawing figure in that the fastening device has but one movable jaw element 6a whereas the opposite jaw element 22 is an integrated part of the body 6a itself. Otherwise, the function of the embodiment in accordance with Fig. 10 agrees with that of the previous embodiment. Equivalent components to those in the preceding embodiment are referred to by the same numeral references.

The invention is not limited to the embodiments described above and illustrated in the drawings by way of example only but could be varied as to its details within the scope of the appended claims without departure from the basic idea of the invention. For instance, the fastening device in accordance with the invention may be used to fasten other objects than load carriers on vehicles. The device could also be used to be fastened on other supports than vehicles. In accordance with the embodiment illustrated the jaw elements 6b are wedge-shaped and the actuating means for controlling them consists of screws directed essentially at right angles to the support, whereby the force and movement transmission ratio is obtained as a result of the inclination of the mutually co-operating slide faces 11 on the body and the jaw element, respectively. However, the slide faces may be otherwise directed and the direction of the actuating means 7, which could be other types than screws, could also differ from the one illustrated in the drawing figures.

## Claims

1. A device for releasable attachment of an object to a support, preferably for releasable attachment of load carriers (1) and the like to the external face of a vehicle (2), such as the vehicle roof, and consisting of a base member (5) arranged to be stationarily secured to the support and including oppositely directed end portions (5b', 5b'') designed to be engaged from underneath from opposite sides, and of a grip member (6) arranged to be fastened on said object and including jaws (6b) movable between an opening position, the release . position, wherein said jaws are freely movable past the base member end portions, and a loaded grip-engagement position in which said jaws grippingly engage the base member end portions (5b', 5b''), **chara cterized** in that the grip member (6) consists of a main body part (6a) with at least one obliquely extending slide face (11, 12) thereon forming a path on which slides a jaw element (6b) being configured as a wedge and being arranged to be displaced by an actuating means (7) along said paths, from its release position to its grip-engagement position.

2. A device as claimed in claim 1, **characterized** in that the actuating means is a tightening screw which is screwed into the jaw element (6b) and which is formed with a shoulder (15) arranged to rest against a support face (16) associated with the grip member.

3. A device as claimed in claim 2, **characterized** in that grip member slide path (11, 12) extends obliquely and that the jaw element (6b) is configured as a wedge tapering towards the shoulder of the tightening screw (7) and acting between the slide path on the grip member (6) and the corresponding end portions (5b', 5b") on the base member.

4. A device as claimed in claim 3, **characterized** in that the end portions (5b', 5b'') of the base member (5) have a dovetail configuration of opposite inclination to that of the slide path (11, 12).

5. A device as claimed in any one of the preceding claims, **characterized** in that the jaw element (6b) is formed with a track guide means co-operating with the slide path (11, 12), preferably in the shape of a protrusion (18) on the jaw element and engaging in a groove (19) formed in the slide path.

6. A device as claimed in any one of the preceding claims, **characterized** in that the jaw element (6b) is formed with a track guide means co-operating with the end portions (5b', 5b'') of the base member (5) for lateral control of these components.

7. A device as claimed in claim 5, **characterized** in that the groove (19) formed in the slide path comprises an undercut and in that the laterally projecting part (18a) of the protrusion penetratres into said undercut.

8. A device as claimed in any one claims 3 or 4, **characterized** in that the base member (5) has an abutment face (23) projecting past the end portion (5b', 5b'') and positioned below the latter for supporting the wedge-shaped jaw element (6b), said jaw element likewise forming a slide face turned in the direction of engagement on which face the jaw element slides upon interconnection of the grip member and the base member.

9. A device as claimed in any one of the preceding claims, **characterized** in that the base member is adapted for securement inside a furrow-like depression (3) formed in the vehicle roof and in that the grip member forms part of the foot member (la) of a load carrier.

## Patentansprüche

1. Einrichtung für die lösbare Anbringung eines Objekts an einer Stütze, vorzugsweise für die lösbare Anbringung von Lastträgern (1) und dergleichen an der Außenseite eines Fahrzeugs (2), wie etwa dem Fahrzeugdach, die aus einem Basisglied (5), das zur stationären Sicherung an der Stütze ausgelegt ist und in entgegengesetzte Richtungen weisende Endteile (5b', 5b'') enthält, die ausgelegt sind, von unten von entgegengesetzten Seiten aus in Eingriff genommen zu werden, und aus einem Griffglied (6) besteht, das ausgelegt ist, an dem Objekt befestigt zu werden und Backen (6b) enthält, die zwischen einer Öffnungsposition, der Löseposition, in welcher die Backen frei an den Basisgliedendteilen vorbei bewegt werden können, und einer belasteten Griffeingriffsposition, in der die Backen die Basisgliedendteile (5b', 5b'') greifend in Eingriff nehmen, bewegt werden können, dadurch gekennzeichnet, daß das Griffglied (6) aus einem Hauptkörperteil (6a) besteht, wobei mindestens eine schräg verlaufende Gleitfläche (11, 12) daran einen Weg bildet, an dem ein Backenelement (6b), das wie ein Keil konfiguriert ist und so ausgelegt ist, daß es durch ein Betätigungsmittel (7) entlang diesen Wegen verschoben werden kann, aus seiner Löseposition in seine Griffeingriffsposition gleitet.

2. Einrichtung nach Anspruch 1, dadurch gekennzeichnet, daß das Betätigungsmittel eine Festspannschraube ist, die in das Backenelement (6b) geschraubt wird und mit einer Schulter (15) ausgebildet ist, die ausgelegt ist, an einer dem Griffglied zugeordneten Stützfläche (16) anzuliegen.

3. Einrichtung nach Anspruch 2, dadurch gekennzeichnet, daß der Griffgliedgleitweg (11, 12) schräg verläuft und daß das Backenelement (6b) wie ein Keil konfiguriert ist, der sich zu der Schulter der Festspannschraube (7) verjüngt und zwischen dem Gleitweg auf das Greifglied (6) und den entsprechenden Endteilen (5b', 5b'') auf das Basisglied einwirkt.

4. Einrichtung nach Anspruch 3, dadurch gekennzeichnet, daß die Endteile (5b', 5b'') des Basisglieds (5) eine Schwalbenschwanzkonfiguration mit einer Neigung aufweisen, die der des Gleitwegs (11, 12) entgegengesetzt ist.

5. Einrichtung nach einem der vorhergehenden Ansprüche, dadurch gekennzeichnet, daß das Backenelement (6b) mit einem Bahnführungsmittel ausgebildet ist, das mit dem Gleitweg (11, 12) zusammenwirkt - vorzugsweise in Form eines Vorsprungs (18) an dem Backenelement - und in eine in dem Gleitweg ausgebildete Nut (19) eingreift.

6. Einrichtung nach einem der vorhergehenden Ansprüche, dadurch gekennzeichnet, daß das Backenelement (6b) mit einem Bahnführungsmittel ausgebildet ist, das mit den Endteilen (5b', 5b'') des Basisglieds (5) zusammenwirkt, um diese Komponenten seitlich zu kontrollieren.

7. Einrichtung nach Anspruch 5, dadurch gekennzeichnet, daß die in dem Gleitweg ausgebildete Nut (19) eine Hinterschneidung umfaßt und daß der seitlich vorstehende Teil (18a) des Vorsprungs in die Hinterschneidung ragt.

8. Einrichtung nach einem der Ansprüche 3 oder 4, dadurch gekennzeichnet, daß das Basisglied (5) eine Anschlagfläche (23) aufweist, die an dem Endteil (5b', 5b") vorbeiragt und unter letzterem positioniert ist, um das keilförmige Backenelement (6b) zu stützen, wobei auch dieses Backenelement eine Gleitfläche bildet, die in die Richtung der Eingriffnahme gedreht ist, wobei an dieser Fläche das Backenelement bei Verbindung des Greifglieds und des Basisglieds gleitet.

9. Einrichtung nach einem der vorhergehenden Ansprüche, dadurch gekennzeichnet, daß das Basisglied zur Sicherung in einer an dem Fahrzeugdach ausgebildeten hohlkehlenartigen Vertiefung (3) ausgelegt ist und daß das Griffglied einen Teil des Fußglieds (la) eines Lastträgers bildet.

## Revendications

1. Dispositif pour la fixation amovible d'un objet à un support, de préférence pour la fixation amovible de porte-charges (1) et analogues à la face externe d'un véhicule (2), telle que le toit d'un véhicule, et constitué par un élément de base (5) arrangé pour être fixé à demeure au support et englobant des portions terminales (5b', 5b") orientées dans des directions opposées conçues pour être saisies par le bas à partir des côtés opposés, et par un élément de serrage (6) arrangé pour être fixé audit objet et englobant des mâchoires (6b) mobiles entre une position d'ouverture, la position de libération, dans laquelle lesdites mâchoires sont capables de se déplacer librement au-delà des portions terminales de l'élément de base, et une position chargée de contact par serrage dans laquelle lesdites mâchoires entrent en contact par serrage avec les portions terminales (5b', 5b") de l'élément de base, caractérisé en ce que l'élément de serrage (6) est constitué d'une partie de corps principal (6a) sur laquelle est disposée au moins une face de glissement (11, 12) s'étendant en oblique, formant une voie sur laquelle glisse un élément de mâchoire (6b) de configuration cunéiforme arrangé pour être déplacé par un moyen d'actionnement (7) le long de ladite voie, depuis sa position de libération jusqu'à sa position de mise en contact par serrage.

2. Dispositif selon la revendication 1, caractérisé en ce que le moyen d'actionnement est une vis de serrage qui est vissée dans l'élément de mâchoires (6b) et dans laquelle est façonné un épaulement (15) arrangé pour s'appuyer contre une face de support (16) associée à l'élément de serrage.

3. Dispositif selon la revendication 2, caractérisé en ce que la voie de glissement (11, 12) de l'élément de serrage s'étend en oblique et en ce que l'élément de mâchoire (6b) est configuré sous la forme d'un coin présentant un rétrécissement en direction de l'épaulement de la vis de serrage (7) et agissant entre la voie de glissement sur l'élément de serrage (6) et sur les portions terminales correspondantes (5b', 5b") sur l'élément de base.

4. Dispositif selon la revendication 3, caractérisé en ce que les portions terminales (5b', 5b") de l'élément de base (5) possèdent une configuration en forme de queue-d'aronde dont l'inclinaison est opposée à celle de la voie de glissement (11, 12).

5. Dispositif selon l'une quelconque des revendications précédentes, caractérisé en ce que l'élément de mâchoire (6b) prend la forme d'un moyen de guidage de l'alignement coopérant avec la voie de glissement (11, 12), de préférence sous la forme d'une protubérance (18) sur l'élément de mâchoire et venant s'engrener dans une rainure (19) formée dans la voie de glissement.

6. Dispositif selon l'une quelconque des revendications précédentes, caractérisé en ce que l'élément de mâchoire (6b) est formé à l'aide d'un moyen de guidage de l'alignement coopérant avec les portions terminales (5b', 5b") de l'élément de base (5) pour le contrôle latéral de ces composants.

7. Dispositif selon la revendication 5, caractérisé en ce que la rainure 19 formée dans la voie de glissement comprend un évidement et en ce que la partie (18a) de la protubérance faisant saillie latéralement pénètre dans ledit évidement.

8. Dispositif selon l'une quelconque des revendications 3 ou 4, caractérisé en ce que l'élément de base (5) possède une face de butée (23) faisant saillie au-delà des portions terminales (5b', 5b") et positionnée en dessous de ces dernières pour supporter l'élément de mâchoire (6b) de configuration cunéiforme, ledit élément de mâchoire formant en même temps une face de glissement tournée dans la direction d'engrènement, face sur laquelle l'élément de mâchoire glisse lors d'une interconnexion de l'élément de serrage et de l'élément de base.

9. Dispositif selon l'une quelconque des revendications précédentes, caractérisé en ce que l'élément de base est conçu pour venir se fixer dans une dépression (3) en forme de rainure pratiquée dans le toit du véhicule et en ce que l'élément de serrage fait partie de l'élément de pied (la) d'un porte-charge.
